(19) Europäisches Patentamt

European Patent Office

Office européen des brevets

(11) **EP 0 655 185 B1**

(12) **FASCICULE DE BREVET EUROPEEN**

(45) Date de publication et mention
de la délivrance du brevet:
**22.12.1999 Bulletin 1999/51**

(51) Int. Cl.$^6$: **A01B 63/111**

(21) Numéro de dépôt: **94402627.7**

(22) Date de dépôt: **18.11.1994**

(54) **Procédé et dispositif de contrôle en effort et en position**

Verfahren und Vorrichtung zur Steuerung von Zugkraft und Lage

Method and device for draft and position control

(84) Etats contractants désignés:
**BE DE ES GB IT**

(30) Priorité: **26.11.1993 FR 9314162**

(43) Date de publication de la demande:
**31.05.1995 Bulletin 1995/22**

(73) Titulaire: **RENAULT-AGRICULTURE**
**78141 Velizy Villacoublay Cédex (FR)**

(72) Inventeurs:
• **Bauzon, Jacques**
 **F-92260 Fontenay-Aux-Roses (FR)**
• **Gorseth, Stève**
 **Fargo, North Dakota 58103 (US)**

(74) Mandataire:
**Ernst-Schonberg, Michel et al**
**RENAULT,**
**Service 02 67,**
**860, Quai de Stalingrad**
**92109 Boulogne-Billancourt (FR)**

(56) Documents cités:
**DE-A- 3 240 278** **DE-A- 3 838 497**
**US-A- 4 508 176**

## Description

La présente invention concerne un procédé et un dispositif permettant de contrôler la position d'un outil agricole attelé à un tracteur, et l'effort de traction subi par ce dernier. Plus précisément, elle a pour objet un procédé et un dispositif de contrôle mixte prenant en compte électroniquement les indications de capteurs d'effort et de position, en relation avec le réglage choisi par l'utilisateur (voir DE-A-3240278).

Les systèmes de relevage hydraulique connus proposent des contrôles séparés, ou des contrôles mixtes, de la position d'un outil agricole et de l'effort de traction du tracteur. Dans le premier cas, l'utilisateur dispose en cabine de deux commandes distinctes, qui lui permettent de programmer une consigne de position et une consigne d'effort de traction. L'outil est alors déplacé de façon à suivre ces consignes. Dans la pratique, l'effort de traction correspondant à une position de l'outil et à une vitesse de travail données, est généralement différent de la consigne d'effort de traction choisie par l'opérateur. Ces deux commandes ne sont donc pas indépendantes. De fait, si l'effort prévu à la position et à la vitesse préétablie est inférieur à l'effort rencontré le système obéira à la consigne d'effort et l'outil ne rejoindra pas la position choisie.

En revanche, si la consigne d'effort est supérieure à l'effort rencontré, l'outil rejoindra sa position sans obéir à celle-ci. L'inconvénient supplémentaire de ce type de relevage est que le deux commandes, présentées comme distinctes, ne le sont pas, puisqu'elles ont le même résultat, à savoir déplacer l'outil. Par ailleurs, pour ne pas modifier la position choisie, la consigne d'effort doit obligatoirement être supérieure à l'effort moyen rencontré. Ce dernier point exige de l'agriculteur une bonne estimation des efforts rencontrés en fonction de la vitesse du tracteur et de la profondeur de travail.

La publication US 4 508 176 décrit un dispositif de commande de ce type comportant une régulation de la profondeur de travail et une régulation d'effort pour un ensemble tracteur-charrue. La consigne en position est établie par un levier disponible en cabine, auquel est associé un capteur de position. Ce levier est équipé d'un contact, qui permet d'échantillonner la valeur de l'effort de traction subi par le tracteur. Si le conducteur appuie sur le contact, le système ne contrôle que la position de relevage, et ignore l'effort de traction. Cette position du contact est avantageusement utilisée pendant la descente de l'outil. Quand la position de travail est atteinte, le conducteur relâche le contact, et le système mémorise la valeur indiquée par un capteur d'effort en traction. La valeur mémorisée est alors considérée comme une consigne d'effort. Les erreurs en position dEp et en effort dEd détectées par la suite sont exploitées pour la régulation, le système utilisant sélectivement dEp ou dEd pour contrôler les valves électrohydrauliques du relevage. Avec un tel dispositif, la mesure d'effort effectué par le conducteur est ponctuelle. Par suite, si elle est réutilisée en tant que consigne pendant toute la durée du travail, cette consigne sera erronée dès que l'effort moyen variera pour la position considérée. Par exemple, sur un terrain en pente, de nature homogène, l'effort rencontré est différent selon le sens de déplacement du tracteur (montée ou descente). Le système cherchera à minimiser les examens dEp et dEd en descente, ce qui conduira normalement à une position de l'outil d'autant plus différente de la position souhaitée, que l'outil sera lourd. Pour s'adapter à ce type de situation, le conducteur doit effectuer une nouvelle mesure après chaque virage en bout de raie. Par ailleurs, le dispositif proposé dans cette publication ne permet pas de limiter le déplacement des bras en contrôle d'effort.

Dans le second cas, l'opérateur dispose d'une commande de position associée à une commande appelée "commande mixte" de contrôle en effort et en position. Cette dernière, généralement graduée en pourcentage d'effort permet de moduler les déplacement de l'outil, en fonction de l'effort de traction. L'opérateur peut ainsi disposer d'un contrôle en position de l'outil ne prenant pas en compte l'effort de traction rencontré (0 % de contrôle d'effort affiché sur la commande mixte) ou d'un contrôle d'effort autorisant les plus grands déplacements en fonction de l'effort de traction rencontré (100 % de contrôle d'effort affiché sur la commande mixte). Les positions intermédiaires de la commande mixte permettent de moduler les déplacements de l'outil autour d'une profondeur moyenne travaillée. L'avantage des systèmes à contrôle mixte en effort et en position est tout d'abord de dispenser l'opérateur d'une appréciation réelle de l'effort rencontré sur le terrain : il lui suffira en effet de prendre en considération la profondeur de travail souhaitée (consigne de position) et le déplacement toléré autour de celle-ci (consigne "mixte"). Par ailleurs, l'opérateur dispose désormais de manettes dont l'actionnement n'a pas le même résultat sur le relevage.

Ce type de commande mixte est illustré notamment par la publication EP 0043 725 décrivant un dispositif de régulation de position et d'effort qui utilise plusieurs capteurs, dont deux sont affectés à la mesure des consignes de position et de la commande mixte, un troisième capteur assurant le contrôle en position d'un actionneur électrohydraulique, et deux autres capteurs nécessaires à la détection d'effort et de position du relevage. L'utilisation pratique d'un tel dispositif de régulation montre que les deux commandes (position et mixte") ne sont pas réellement indépendantes. En effet, l'action sur la commande mixte influe sur la position de travail de l'outil. Cette interférence conduit l'utilisateur qui agit sur sa commande "mixte" à rectifier sa commande de position s'il souhaite conserver sa profondeur de travail. Elle a pour origine la loi d'asservissement utilisée dans le dispositif de régulation. En effet, cette loi est telle que la position d'équilibre atteinte par l'outil dépend de la valeur de commande "mixte" adaptée et de la valeur de l'effort rencontré. En d'autres termes, pour une même consigne de position choisie par le conducteur, la profondeur moyenne atteinte dépend de la valeur moyenne de l'effort rencontré et de la consigne "mixte" affichée.

D'autre part, le dispositif de régulation proposé par la publication EP 043 725 utilise dans sa loi d'asservissement une mesure d'effort de traction absolue. Etant donné que l'effort de traction exercé par le tracteur sur un outil varie avec la pente du terrain, la prise en compte de la valeur absolue de l'effort rencontré, dans la loi d'asservissement en position, conduit à des profondeurs différentes selon la pente du terrain.

La présente invention vise à supprimer les inconvénients des systèmes connus, en assurant l'indépendance de la position moyenne de l'outil vis-à-vis de la consigne de contrôle d'effort de traction.

Elle propose à cet effet un procédé de contrôle en position et en effort d'un outil attelé à un tracteur, sur la base d'une consigne de position Ep et d'une consigne de pourcentage d'effort établies par l'opérateur, caractérisé en ce que :

- l'effort moyen FM rencontré par le tracteur est mesuré automatiquement sur une période de référence débutant dès que l'outil a rejoint sa position de consigne,

- l'erreur en position dEp par rapport à Ep et l'erreur d'effort instantané dEd égale à la différence entre l'effort de traction mesuré FT et l'effort moyen rencontré sont comparées par un soustracteur (35) qui élabore la donnée : ES = dEp - dEd , et

- à l'issue de cette période sont établis automatiquement des signaux de relevage ou d'abaissement de l'outil visant à minimiser ES en compensant l'erreur d'effort instantanée dEd par rapport à l'effort moyen mesuré, par un déplacement en position dEp.

Selon un mode de réalisation de l'invention, le signal d'erreur en effort dEd est obtenu en multipliant le résultat de la comparaison entre la valeur moyenne d'effort mesuré et l'effort instantané par une valeur de gain MX, accessible par l'utilisateur.

Selon un mode de réalisation de l'invention, le résultat de la comparaison ES = dEp - dEd subit un traitement proportionnel intégral, dont le résultat assimilé à un signal d'erreur total ET est traité en vue de générer des signaux impulsionnels de commande de relevage ou d'abaissement de l'outil.

Selon un mode de réalisation de l'invention, l'opérateur a la possibilité d'interrompre le mouvement de l'outil en remplaçant la valeur de consigne en position CPOS par la position réelle de l'outil POS, de façon à annuler le signal d'erreur dEp, et en forçant la valeur d'erreur dEd, à zéro.

Selon un mode de réalisation de l'invention, l'opérateur a la possibilité d'imposer une consigne de position haute de l'outil.

L'invention concerne également un dispositif de contrôle en position et en erreur pour la mise en oeuvre d'un procédé conforme à la revendication 1 comprenant au moins un capteur de position (9) des bras d'attelage (2) du tracteur (1) et un capteur (11) reliés à un boîtier de commande (10) du relevage comprenant des moyens pour comparer l'erreur en position dEp et l'erreur d'effort instantané dEd par un soustracteur (35) qui élabore la donnée : ES = dEp - dEd , cette donnée ES etant automatiquement minimisée en déplaçant l'outil, des moyens pour mesurer automatiquement l'effort moyen rencontré par le tracteur sur une période de référence débutant dès que l'outil a rejoint sa position de consigne, des moyens pour calculer l'erreur d'effort instantané dEd qui est la différence entre l'effort de traction mesuré FT par rapport à l'effort moyen rencontré FM, et des moyens pour établir automatiquement, à l'issue de cette période, des signaux de relevage ou d'abaissement de l'outil visant à compenser l'erreur d'effort instantanée dEd par une erreur ou un déplacement en position dEp, ce boîtier (10) comportant un commutateur (13) à positions multiples permettant, notamment à l'opérateur, de déclencher le contrôle en effort et en position, et d'imposer l'immobilisation de l'outil dans sa position ou son déplacement jusqu'à une position de butée haute.

Selon un mode de réalisation de l'invention, le boîtier de commande comporte des moyens de réglage permettant d'imposer une consigne de position et une consigne de pourcentage d'effort modifiant le gain MX dans le contrôle de position.

Selon un mode de réalisation de l'invention, le dispositif de contrôle comporte un microprocesseur renfermant au moins un comparateur du signal d'erreur en position dEp et en effort dEd mesurés et un intégrateur permettant d'établir le signal d'erreur total ET à minimiser.

Selon un mode de réalisation de l'invention, le microprocesseur comporte un filtre numérique à bande commutable, dont la première bande de fréquence est utilisée pour acquérir la valeur moyenne de l'effort de traction, et la seconde bande est utilisée pour filtrer la mesure de l'effort détecté.

Selon un mode de réalisation de l'invention, les capteurs de position et d'effort, et le commutateur, sont reliés au microprocesseur par l'intermédiaire d'un multiplexeur et d'un convertisseur analogique-numérique.

Selon un mode de réalisation de l'invention, les réglages en position et en contrôle d'effort s'effectuent à l'aide de touches de contact, disposées sur le boîtier de commande.

D'autres caractéristiques et avantages de l'invention apparaîtront à la lecture de la description suivante d'un mode de réalisation particulier de l'invention, en liaison avec les dessins annexés, sur lesquels :

- la figure 1 est un schéma simplifié d'un tracteur agricole du dispositif de l'invention,

- la figure 2, représente un boîtier de commande de ce dispositif,

- la figure 3 se rapporte au synoptique de ce boîtier de commande,

- la figure 4 illustre le traitement des signaux effectué dans le microprocesseur du boîtier.

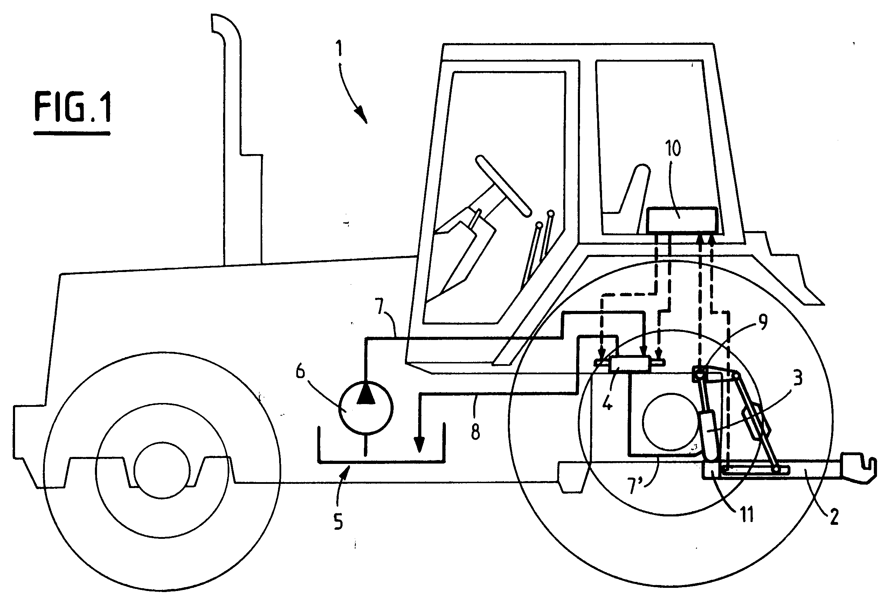

Le tracteur agricole 1 représenté sur la figure 1 comporte deux bras d'attelage 2 d'un outil agricole non représenté, commandés en position par au moins un vérin hydraulique 3 placé sous le contrôle d'au moins une valve proportionnelle électrohydraulique 4. Les valves 4 pilotant les vérins 3 sont alimentées en fluide de pression à partir d'une bâche 5, par l'intermédiaire d'une pompe hydraulique 6. De façon classique, la rotation du moteur du tracteur (non représenté) assure l'entraînement de la pompe 6. Le circuit hydraulique comporte au moins une conduite d'alimentation 7 des électrovannes 4, une conduite de pilotage 7' des vérins 3 et une conduite de retour à la bâche 8 permettant de vidanger les vérins 3. La position des bras d'attelage 2 est repérée par un capteur de position 9 relié à un boîtier de commande 10. Ce dernier active les électrovannes 4 par un courant de commande adapté à la stratégie appliquée. L'effort transmis par l'outil au tracteur 1, est mesuré par un des capteurs d'effort 11 disposé de façon appropriée sur le tracteur, ou par tout autre équipement de détection d'effort. En fonction de la stratégie de contrôle en position et en effort établie et des consignes imposées par l'utilisateur, le boîtier électronique 10 transmettra aux valves 4 les consignes de pilotage des vérins 3 commandant la position des bras 2.

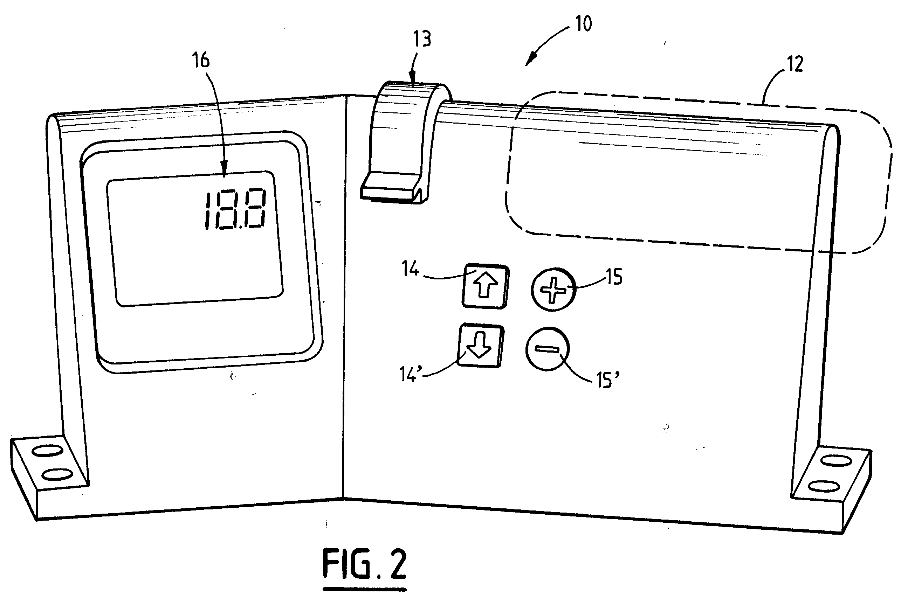

Le boîtier de commande 10 de la figure 2 constitue un exemple non limitatif de boîtier de commande permettant à l'utilisateur de contrôler de l'intérieur du tracteur 1 les bras d'attelage 2 en position et en effort, conformément à l'invention. Sur ce boîtier, on distingue une zone d'appui de main ergonomique 12, grâce à laquelle l'utilisateur peut tenir fermement par-la paume de sa main le boîtier 10, tout en pouvant actionner à l'aide de ses doigts un commutateur à quatre positions 13 et quatre touches groupées 14, 14', 15, 15'.

Le commutateur 13 possède :

- une première position, ou position de travail, dans laquelle l'outil est placé dans une position de travail par la consigne de position de l'opérateur,

- une seconde position ou position stop, permettant d'immobiliser instantanément en position les bras de relevage, quelle que soit leur position,

- une troisième position ou position de "butée haute", dans laquelle les bras sont conduits en position haute, convenant notamment pour effectuer les demi-tours en fin de champ.

- une quatrième position ou position de transport, permettant d'invalider les touches 14, 14', 15, 15' lorsque les deux bras 2 sont en position haute, en vue d'assurer la sécurité lors du transport sur route. On peut égalementprévoir que si le commutateur quitte cette position pendant le transport, les commandes de réglages restent invalidées, jusqu'à l'exécution d'une procédure particulière de façon à supprimer tout risque de déplacement involontaire de l'outil.

Les touches 14, 14', 15, 15' sont destinées aux réglages proprement dits, c'est-à-dire à l'introduction d'une consigne de position de l'outil à l'aide des touches "haut" et "bas" 14, 14' et à l'introduction d'une consigne de pourcentage d'effort contrôlé, dite consigne de "contrôle mixte" de 0 à 100 % à l'aide des touches "plus" et "moins" 15, 15', permettant de façon classique à l'opérateur de moduler les débattements imposés à l'outil en fonction de l'effort de traction rencontré. Enfin, l'afficheur 16 permet de visualiser l'état des réglages et des commandes en cours.

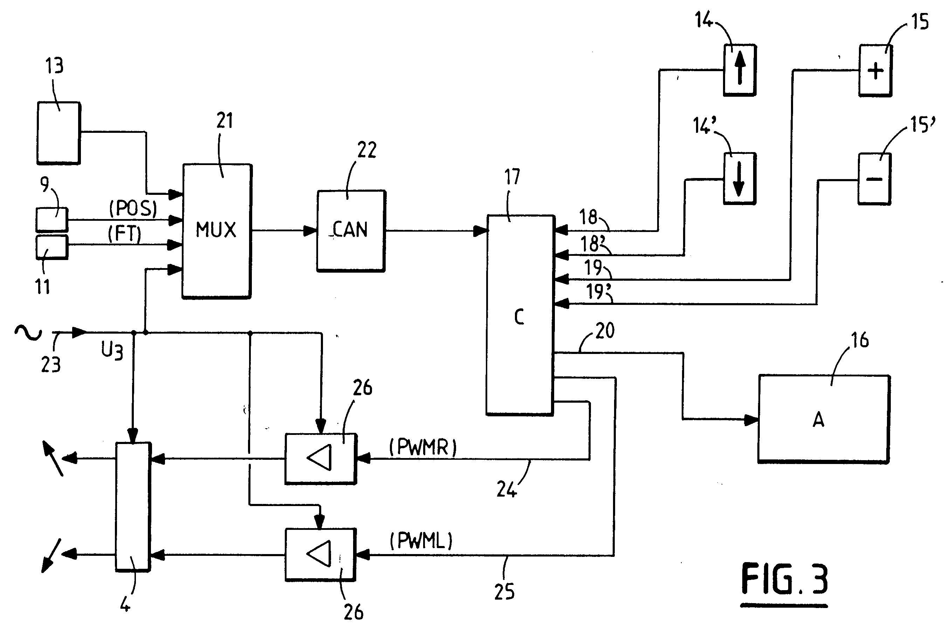

Sur la figure 3, on a regroupé les principaux éléments de commande nécessaires à la mise en oeuvre de l'invention. Ces éléments peuvent par exemple être regroupés dans un boîtier tel que le boîtier 10 illustré par la figure 2, mais on peut bien entendu envisager d'autres types d'interface entre les éléments de commandes concernés et l'utilisateur, sans sortir du cadre de l'invention. Le microprocesseur 17 ou microcontrôleur apparaissant sur la figure 3 possède quatre entrées logiques 18, 18', 19, 19', correspondant respectivement à l'état des quatre touches 14, 14', 15, 15' et une sortie 20 en direction de l'afficheur 16.

De façon classique, un convertisseur analogique-numérique (CAN) 22 relié à un multiplexeur 21 (MUX), convertit séquentiellement en valeur numérique les informations analogiques issues du capteur en position 9, du capteur d'effort 11, d'un potentiomètre (non représenté), relevant la position du commutateur 13 mentionné plus haut, et de la tension d'alimentation 23 des solénoïdes de chaque électrovalve 4 utilisée pour piloter les vérins 3. L'ensemble de ces signaux pourra par exemple être échantillonné à une fréquence de 250 Hz, une fréquence différente pouvant bien entendu convenir, pour autant qu'elle soit suffisamment grande par rapport à la réponse en boucle fermée du relevage. La valeur numérique du capteur de position POS est normalisée par rapport à une valeur maximale représentative de la position la plus haute du relevage, obtenue après étalonnage. La valeur numérique de l'effort de traction FT est également normalisée par rapport à un effort maximum, l'ensemble des nombres obtenus étant inférieur à l'unité. Enfin, le microprocesseur ou microcontrôleur 17 possède deux sorties logiques 24, 25 générant des signaux impulsionnels à modulation de largeur d'impulsion (PWMR) et (PWML) traitées par un amplificateur 26 en vue de commander les valves électrohydraulique 4 de pilotage des vérins 3, pour soulever ou abaisser l'outil.

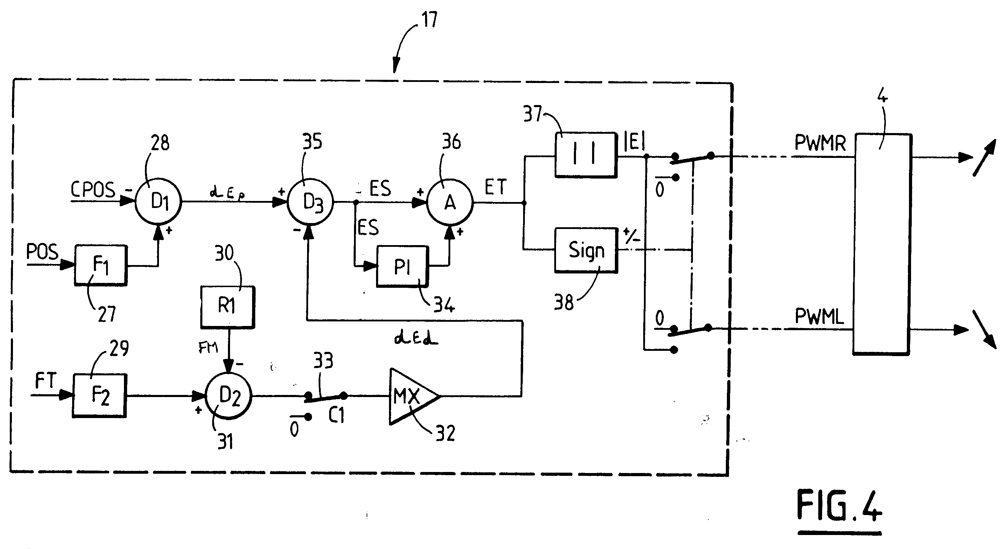

L'ensemble des opérations définissant la stratégie de contrôle en position et en effort proposée par l'invention, qui sont exécutées par le microprocesseur ou microcalculateur 17, est illustré par la figure 4. Ce schéma met notamment en évidence que le signal numérique (POS) fourni par le capteur de position 9 est traitée par un premier filtre numérique ($F_1$) 27 et comparée dans un premier soustracteur 28 ($D_1$) à la consigne de position CPOS établie par l'utilisateur, de façon à disposer d'un signal d'erreur en position dEp. Le traitement de l'effort est par ailleurs effectué à partir d'un échantillonnage de l'effort de traction mesuré FT. Le signal FT est filtré par un second filtre ($F_2$) 29, tel qu'un filtre "passe-bas" du premier ordre à bande commutable, une première bande de fréquence de coupure (par exemple 0,04 Hz) permettant d'acquérir la valeur moyenne de l'effort de traction FM pendant un intervalle de temps de quelques secondes (par exemple 5 s), qui est mémorisée dans un registre 30 ($R_1$), tandis qu'une seconde bande de fréquence (par exemple 0,06 Hz) est utilisée pour filtrer la mesure de l'effort détecté FT, s'effectuant après celle de la valeur moyenne FM. Les valeurs FT après filtrage et FM sont comparées dans un second soustracteur 31 ($D_2$). Le résultat de cette comparaison est ensuite traité par un amplificateur (MX) 32 de façon à générer une valeur dEd appelée "erreur en effort". Le commutateur 33 ($C_1$) permet d'annuler Ed et de ne pas tenir compte de l'effort de traction dans la régulation.

Le signal d'erreur en position dEp peut alors être comparé dans un troisième soustracteur 35 ($D_3$) au signal d'erreur d'effort dEd. Le résultat de la soustraction ES = dEd - dEp subit un traitement intégral dans l'intégrateur 34 (PI) et le résultat de cette intégration δ est additionné à ES, dans un additionneur 36 (A) de façon à obtenir un signal d'erreur totale ET, dont deux unités de calcul 37, 38 déterminent respectivement la valeur absolue et le signe. Selon le signe de ET, le traitement se poursuit au sein du module de calcul (17) de façon à obtenir des signaux de sortie, de type impulsionnel à largeur d'impulsion variable PWMR ou PWML, commandant le relevage ou l'abaissement de l'outil.

Le fonctionnement du dispositif qui vient d'être décrit, déclenché par le commutateur 13, est le suivant. Lorsque le commutateur 13 est en position de "butée haute", la valeur de dEd est annulée par le commutateur 33 ($C_1$) et la donnée CPOS est représentative d'une consigne de position haute de l'outil. La donnée dEp est alors nulle. L'utilisateur qui désire placer l'outil dans sa position de travail bascule le commutateur rotatif en position de "travail". La consigne CPOS est alors modifiée et représente la position de travail que doit atteindre l'outil. Le filtre 29 ($F_2$) est en bande étroite (0.04Hz) et filtre le signal FT. Tant que l'outil n'a pas atteint cette position, Ep est égal à l'erreur totale ET et une commande de descente est effectuée. Dès que la position est atteinte, Ep est nul, et la mesure de la valeur moyenne est effectuée pendant 5s. Le registre $R_1$ stocke ensuite cette valeur et le filtre $F_2$ est commuté en bande large (0.06Hz). Le commutateur $C_1$ change ensuite d'état et les variations de FT autour de la valeur moyenne sont multipliées par la valeur MX pour constituer l'erreur dEd. Dans la position "Travail" du commutateur rotatif l'erreur d'effort dEd est compensée par un déplacement en position dEp, de façon à assurer en régime statique la relation : ET = 0.

La valeur moyenne d'effort FM stockée dans $R_1$ est mesurée à la profondeur de consigne voulue par l'utilisateur. Elle s'adapte donc aux changements de conditions de travail de raies à raies, imposées par l'exploitation, tout en garantissant une profondeur moyenne travaillée constante.

La valeur de gain MX permet d'augmenter l'erreur dEd ce qui augmente l'erreur de compensation en position dEp mais n'influe pas sur sa valeur moyenne qui est nulle, en régime statique. La valeur de consigne CPOS étant constante, les variations de la commande de mixte n'influenceront pas la valeur moyenne du signal POS représentatif de la position de l'outil.

En extrémité de raie l'utilisateur replace le commutateur rotatif en position "butée haute", ce qui annule l'erreur dEd et change la valeur de consigne CPOS. Une commande de montée est générée pour annuler l'erreur en position dEp tant que l'outil n'a pas atteint sa position de consigne.

L'utilisateur peut à tout moment interrompre le mouvement de l'outil en positionnant le commutateur rotatif en position "stop", ce qui remplace la valeur de consigne CPOS par la valeur de la position réelle de l'outil POS et fait changer d'état le commutateur $C_1$. Le signal d'erreurs dEp est alors annulé et la valeur d'erreur dEd forcée à zéro.

La position "transport" du commutateur rotatif ne modifie pas l'état des boucles d'asservissement établi en position haute. Les évolutions de la consigne de position CPOS ou de la commande de mixte sont alors invalidées ce qui assure la sécurité du dispositif en transport.

Le procédé de contrôle en position et en effort, d'un outil attelé à un tracteur agricole proposé par l'invention est adaptatif, dans le sens où le boîtier électronique 10 mesure automatiquement et mémorise automatiquement l'effort moyen subi par le tracteur, pour la position de travail de l'outil choisi et sa vitesse, avant toute régulation. Une fois cette valeur moyenne d'effort connue, un écart dEd est calculé, qui dépend de la valeur moyenne estimée de l'effort et de sa valeur instantanée et filtrée. Le microprocesseur 17 détermine aussi un écart en position dEp égal à la différence entre une valeur de consigne en position CPOS, choisie par l'utilisateur, et une valeur instantanée et filtrée de la position du relevage du tracteur.

Le dispositif proposé par l'invention minimise automatiquement ensuite la différence des écarts (dEp) et (dEd) en déplaçant l'outil. Pour cela, il effectue une commande de montée ou de descente sur la ou les valves électrohydrauliques 4, qui contrôlent la position de l'outil.

Ce dispositif est mis en route de façon automatique dès la mise sous tension du tracteur.

En début de travail, à la première descente de l'outil, tant que la position de travail désirée par l'agriculteur CPOS n'est pas atteinte, le dispositif ignore l'effort de traction, et se contente de minimiser l'écart en position dEp. Dès que cette position de travail est atteinte, le dispositif minimise les écarts en position dEp et en effort de traction dEd. Il utilise, à cet effet, les capteurs de position du relevage et d'effort de traction généralement disponibles sur le tracteur.

Ce dispositif est utilisé principalement pour assurer un contrôle de la position de l'outil à une profondeur et une vitesse de travail donnée tout en autorisant des déplacements de ce dernier si l'effort de traction instantané devient prohibitif. Ces déplacements sont contrôlés en amplitude par la "commande de Mixte" 15, 15', associée à une commande de consigne en position CPOS 14, 14'. L'utilisateur dispose ainsi de deux commandes de contrôle qui lui permettent, d'une part, de choisir la position de travail de l'outil (en modifiant la variable CPOS et, d'autre part, d'autoriser des évolutions autour de cette position (par la "commande de Mixte").

La "commande de Mixte" 15, 15' comporte deux positions extrêmes. L'une minimise les évolutions et maintient la consigne CPOS quelque soit l'effort de traction (position 0), l'autre maximise les mêmes évolutions en fonction de l'effort de traction (position 100) et permet ainsi de contrôler cet effort. A cet effet, le dispositif de contrôle objet de l'invention diminue l'effort en commandant une remontée si l'écart en effort dEd est positif, et autorise une descente de l'outil si dEd est négatif.

Enfin le commutateur 13 disposé sur le boîtier électronique de contrôle 11, permet à l'utilisateur de commander soit la position de travail pour le travail en raie de labour, par exemple, ou une position haute de l'outil pour les besoins de manoeuvres en transport ou en extrémité de raie.

Le dispositif proposé répond ainsi au besoin de l'utilisateur qui désire soit une profondeur de travail constante, pour des travaux précis (labour, semoir...), ou préfère minimiser les efforts subis par le tracteur pour des travaux à profondeur peu précises (déchaumage, sous-solage....).

Le procédé et le dispositif de contrôle en effort et en position proposés par l'invention présentent pour avantage principal de garantir une position moyenne de travail indépendante de l'effort moyen de traction. En particulier l'invention permet de s'affranchir des différences d'effort rencontrées sur un même terrain lorsque la pente évolue, ou selon son sens de parcours. En effet, l'opérateur a la possibilité d'effectuer une nouvelle mesure de l'effort moyen rencontré dès qu'il le juge nécessaire, notamment à chaque demi-tour en bout de raie. Enfin, il faut souligner que l'utilisation de commandes par contacts pour effectuer les réglages en position et en effort ("commande mixte"), est extrêmement avantageuse en raison du niveau de vibrations relativement élevé des cabines de tracteur, et du faible coût de réalisation de ces commandes.

## Revendications

1. Procédé de contrôle en position et en effort d'un outil attelé à un tracteur, sur la base d'une consigne de position Ep et d'une consigne de pourcentage d'effort établies par l'opérateur, caractérisé en ce que :

   - l'effort moyen FM rencontré par le tracteur est mesuré automatiquement sur une période de référence débutant dès que l'outil a rejoint sa position de consigne,

   - l'erreur en position dEp par rapport à Ep et l'erreur d'effort instantané dEd égale à la différence entre l'effort de traction mesuré FT et l'effort moyen rencontré sont comparées par un soustracteur (35) qui élabore la donnée : ES = dEp - dEd , et

   - à l'issue de cette période sont établis automatiquement des signaux de relevage ou d'abaissement de l'outil visant à minimiser ES en compensant l'erreur d'effort instantanée dEd par rapport à l'effort moyen mesuré, par un déplacement en position dEp.

2. Procédé de contrôle en effort ou en position selon la revendication 1, caractérisé en ce que le signal d'erreur en effort dEd est obtenu en multipliant le résultat de la comparaison entre la valeur moyenne d'effort mesuré et l'effort instantané par une valeur de gain MX, accessible par l'utilisateur.

3. Procédé de contrôle en effort ou en position selon les revendications 1 ou 2, caractérisé en ce le résultat de la comparaison ES = dEp - dEd subit un traitement proportionnel intégral, dont le résultat assimilé à un signal d'erreur total ET est traité en vue de générer des signaux impulsionnels de commande de relevage ou d'abaissement de l'outil.

4. Procédé de contrôle en effort ou en position selon l'une des revendications 1, 2, ou 3, caractérisé en ce l'opérateur a la possibilité d'interrompre le mouvement de l'outil en remplaçant la valeur de consigne en position CPOS par la position réelle de l'outil POS, de façon à annuler le signal d'erreur dEp, et en forçant la valeur d'erreur dEd à zéro.

5. Procédé de contrôle en effort ou en position selon l'une des revendications précédentes, caractérisé en ce que l'opérateur a la possibilité d'imposer une consigne de position haute de l'outil.

6. Dispositif de contrôle en position et en erreur pour la mise en oeuvre d'un procédé conforme à la revendication 1 comprenant au moins un capteur de position (9) des bras d'attelage (2) du tracteur (1) et un capteur d'effort (11) reliés à un boîtier de commande (10) du relevage comprenant des moyens pour comparer l'erreur en position dEp et l'erreur d'effort instantané dEd par un soustracteur (35) qui élabore la donnée : ES = dEp - dEd , cette donnée ES étant automatiquement minimisée en déplaçant l'outil, des moyens pour mesurer automatiquement l'effort moyen rencontré par le tracteur sur une période de référence débutant dès que l'outil a rejoint sa position de consigne, des moyens pour calculer l'erreur d'effort instantané dEd qui est la différence entre l'effort de traction mesuré FT par rapport à l'effort moyen rencontré FM, et des moyens pour établir automatiquement, à l'issue de cette période, des signaux de relevage ou d'abaissement de l'outil visant à compenser l'erreur d'effort instantanée dEd par une erreur ou un déplacement en position dEp, ce boîtier (10) comportant un commutateur (13) à positions multiples permettant, notamment à l'opérateur, de déclencher le contrôle en effort et en position, et d'imposer l'immobilisation de l'outil dans sa position ou son déplacement jusqu'à une position de butée haute.

7. Dispositif de contrôle en effort et en position selon la revendication 6, caractérisé en ce que le boîtier de commande (10) comporte des moyens de réglage (14, 14', 15, 15'), permettant d'imposer une consigne de position et une consigne de pourcentage d'effort modifiant le gain MX dans le contrôle de position.

8. Dispositif de contrôle en effort et en position selon les revendications 5, 6, ou 7, caractérisé en ce qu'il comporte un microprocesseur (7) renfermant au moins un comparateur (35) du signal d'erreur en position dEp et en effort dEd mesurés et un intégrateur (34) permettant d'établir le signal d'erreur total ET à minimiser.

9. Dispositif de contrôle en effort et en position selon la revendication 8, caractérisé en ce que le microprocesseur (7) comporte un filtre numérique à bande commutable (29), dont la première bande de fréquence est utilisée pour acquérir la valeur moyenne de l'effort de traction, et la seconde bande est utilisée pour filtrer la mesure de l'effort détecté.

10. Dispositif de contrôle en effort et en position selon les revendications 8 ou 9, caractérisé en ce que les capteurs de position (9) et d'effort (11) et le commutateur (13) sont reliés au microprocesseur (7) par l'intermédiaire d'un multiplexeur (21) et d'un convertisseur analogique-numérique (22).

11. Dispositif de contrôle en effort et en position selon les revendications 5 à 10, caractérisé en ce que les réglages en position et en contrôle d'effort s'effectuent à l'aide de touches de contact (14, 14', 15, 15') disposées sur le boîtier de commande (10).

**Claims**

1. A position and force control method for an implement coupled to a tractor, on the basis of a position reference Ep and a force percentage reference set by the operator, characterised in that:

   - the average force FM encountered by the tractor is measured automatically over a reference period that starts as soon as the implement has reached its reference position,
   - the position error dEp with respect to Ep and the instantaneous force error dEd equivalent to the difference between the measured tractive force FT and the average force encountered are compared by a subtractor (35) which processes the relationship: ES = dEp - dEd ,
   - at the end of this period, raising or lowering signals for the implement are automatically processed in order to minimise ES by compensating the instantaneous force dEd with respect to the average force measured by a position displacement dEp.

2. A force and position control method as claimed in claim 1, characterised in that the force error signal dEd is obtained by multiplying the result of the comparison between the average force value measured and the instantaneous force by a gain value MX accessible by the user.

3. A force and position control method as claimed in claims 1 or 2, characterised in that the result of the comparison ES = dEp - dEd is subject to proportional integral processing whose result, assimilated with a total error signal ET, is processed in order to generate pulse signals controlling the raising or lowering of the implement.

4. A force and position control method as claimed in one of claims 1, 2 or 3, characterised in that the operator can interrupt the movement of the implement by replacing the position reference value CPOS by a real position of the implement POS, in order to cancel out the error signal dEp, and by forcing the error value dEd to zero.

5. A force and position control method as claimed in one of the preceding claims, characterised in that the operator may impose a top position reference for the implement.

6. A position and error control device for the implementation of a method as claimed in claim 1, comprising at least one position sensor (9) for the coupling arms (2) of the tractor (1) and a force sensor (11) connected to a lifting control housing (10) comprising means for comparing the position error dEp and the instantaneous force error dEd by means of a subtractor (35) which processes the relationship: ES = dEp - dEd , this datum ES automatically being minimised by moving the implement, means for the automatic measurement of the average force encountered by the tractor over a reference period that starts as soon as the implement has reached its reference position, means for calculating the instantaneous force error dEd which is the difference between the tractive force measured FT and the average effort encountered FM and means for automatically establishing, at the end of this period, signals for raising or lowering the implement adapted to offset the instantaneous force error dEd by an error or position displacement dEp, this housing (10) comprising a multiple-position switch (13) making it possible, for the operator in particular, to trigger the force and position control, and to impose the immobilisation of the implement in its position or its displacement up to a top limit position.

7. A force and position control device as claimed in claim 6, characterised in that the control housing (10) comprises regulation means (14, 14', 15, 15'), making it possible to impose a position reference and a force percentage reference modifying the gain MX in the position control.

8. A force and position control device as claimed in claim 5, 6 or 7, characterised in that it comprises a microprocessor (7) comprising at least one comparator (35) of the position error signal dEp and force error signal dEd measured and an integrator (34) making it possible to establish the total error signal ET to be minimised.

9. A force and position control device as claimed in claim 8, characterised in that the microprocessor (7) comprises a digital filter (29) whose band can be switched, the first frequency band of which is used to acquire the average value of the tractive force and the second band of which is used to filter the measurement of the force detected.

10. A force and position control device as claimed in claims 8 or 9, characterised in that the position and force sensors (9, 11) and the switch (13) are connected to the microprocessor (7) by means of a multiplexer (21) and an analog-digital converter (22).

11. A force and position control device as claimed in claims 5 to 10, characterised in that the position and force control adjustments are carried out by means of contact buttons (14, 14', 15, 15') disposed on the control housing (10).

**Patentansprüche**

1. Verfahren zur Steuerung von Lage und Zugkraft eines an einen Traktor angekoppelten Arbeitsgerätes auf der Grundlage eines von einer Bedienungsperson festgelegten Sollwertes für die Lage Ep und eines prozentualen Sollwertes für die Zugkraft, dadurch gekennzeichnet, dass:

- die vom Traktor aufgenommene mittlere Zugkraft FM automatisch gemessen wird über eine Referenzperiode, die beginnt sowie das Arbeitsgerät seine Sollage eingenommen hat,

- der Lagefehler dEp relativ zu Ep und der momentane Zugkraftfehler dEd, der gleich der Differenz zwischen der gemessenen Zugkraft FT und der mittleren auftretenden Zugkraft ist, durch einen Subtrahierer (35) verglichen werden, der den Wert erstellt: ES = dEp - dEd und

- am Ende dieser Periode automatisch Signale für das Anheben oder Absenken des Arbeitsgerätes erstellt werden im Hinblick auf eine Minimierung von ES durch Kompensieren des momentanen Zugkraftfehler dEd relativ zur gemessenen mittleren Zugkraft durch eine Lageverschiebung dEp.

2. Verfahren zur Steuerung von Lage und Zugkraft nach Anspruch 1, dadurch gekennzeichnet, dass das Zugkraftfehlersignal dEd erhalten wird durch Multiplizieren des Resultates des Vergleiches zwischen dem mittleren Wert der gemessenen Zugkraft und der momentanen Zugkraft mit einem Verstärkungsfaktor MX, auf den die Bedienungsperson Zugriff hat.

3. Verfahren zur Steuerung von Zugkraft und Lage nach den Ansprüchen 1 oder 2, dadurch gekennzeichnet, dass das Resultat des Vergleichs ES = dEp - dEd einer Proportional-Integral-Verarbeitung unterworfen wird, dessen Ergebnis, das einem Gesamtfehlersignal ET gleichgestellt ist, verarbeitet wird, um Impulssignale zu erzeugen zur Steuerung des Anhebens oder Absenkens des Arbeitsgerätes.

4. Verfahren zur Steuerung von Lage und Zugkraft nach einem der Ansprüche 1, 2 oder 3, dadurch gekennzeichnet, dass die Bedienungsperson die Möglichkeit hat, die Bewegung des Arbeitsgerätes zu unterbrechen durch Ersetzen des Lagesollwertes CPOS durch die tatsächliche Lage des Arbeitsgerätes POS, um so das Fehlersignal dEp zu annullieren und den Fehlerwert dEd auf Null zu setzen.

5. Verfahren zur Steuerung von Zugkraft und Lage nach einem der vorhergehenden Ansprüche, dadurch gekennzeichnet, dass die Bedienungsperson die Möglichkeit hat, einen Sollwert für die obere Lage des Arbeitsgerätes festzulegen.

6. Vorrichtung zur Steuerung von Lage und Zugkraft zur Durchführung des Verfahrens nach Anspruch 1, mit mindestens einem Lagefühler (9) für die Anlenkarme (2) des Traktors (1) und mit einem Zugkraftfühler (11), der mit einem Steuergehäuse (10) der Hubanordnung verbunden ist, das eine Anordnung aufweist, um den Lagefehler dEp und den momentanen Zugkraftfehler dEd mittels eines Subtrahierers (35) zu vergleichen, der den Wert: ES = dEp - dEd liefert, welcher automatisch minimiert wird durch Verschieben des Arbeitsgerätes sowie eine Anordnung aufweist, um automatisch die mittlere vom Traktor aufgenommene Zugkraft zu messen über eine Referenzperiode, die beginnt sowie das Arbeitsgerät seine Sollage eingenommen hat, eine Anordnung aufweist zur Berechnung des momentanen Zugkraftfehlers dEd, der gebildet wird aus der Differenz zwischen der gemessenen Zugkraft FT relativ zur mittleren auftretenden Zugkraft FM und eine Anordnung aufweist, um automatisch am Ende dieser Periode Signale zum Anheben oder Absenken des Arbeitsgerätes zu erzeugen im Hinblick auf eine Kompensation des momentanen Zugkraftfehlers dEd durch einen Fehler oder eine Lageverschiebung dEp, wobei das Gehäuse 10 einen Umschalter (13) mit mehreren Stellungen aufweist, der es insbesondere der Bedienungsperson ermöglicht, die Steuerung von Zugkraft und Lage auszulösen und die Feststellung des Arbeitsgerätes in seiner Lage oder seine Verschiebung bis in die obere Anschlagstellung durchzuführen.

7. Vorrichtung zur Steuerung von Lage und Zugkraft nach Anspruch 6, dadurch gekennzeichnet, dass das Steuergehäuse (10) eine Anordnung zur Regelung (14, 14', 15, 15') aufweist, die es ermöglicht, einen Sollwert der Lage und einen Sollwert der prozentualen Zugkraft vorzugeben, wodurch der Verstärkungsfaktor MX in der Lagesteuerung verändert wird.

8. Vorrichtung zur Steuerung von Lage und Zugkraft nach Ansprüchen 6 oder 7, dadurch gekennzeichnet, dass sie einen Mikroprozessor (7) aufweist, mit wenigstens einem Vergleicher (35) für die gemessenen Fehlersignale der Lage dEp und der Zugkraft dEd sowie einen Integrator (34) aufweist zur Erstellung eines zu minimierenden Gesamtfehlersignals ET.

9. Vorrichtung zur Steuerung von Lage und Zugkraft nach Anspruch 8, dadurch gekennzeichnet, dass der Mikroprozessor (7) ein numerisches Filter mit umschaltbaren Bandbereichen (29) aufweist, dessen erstes Frequenzband verwendet wird, um den mittleren Wert der Zugkraft zu erhalten und dessen zweites Band verwendet wird, um die Messung der festgestellten Zugkraft zu filtern.

10. Vorrichtung zur Steuerung von Lage und Zugkraft nach Ansprüchen 8 oder 9, dadurch gekennzeichnet, dass der Lagefühler (9), der Zugkraftfühler (11) und der Umschalter (13) mit dem Mikroprozessor (7) über einen Multiplexer (21) und einen Analog-Digital-Wandler (22) verbunden sind.

11. Vorrichtung zur Steuerung von Lage und Zugkraft nach Ansprüchen 6 bis 10, dadurch gekennzeichnet, dass die Einstellungen für die Lage und die Steuerung der Zugkraft mit Hilfe von Kontaktschaltern (14, 14', 15, 15') erfolgen, die am Steuergehäuse (10) angeordnet sind.

FIG.1

EP 0 655 185 B1

EP 0 655 185 B1

## FIG. 2

FIG. 3

FIG.4